# EUROPEAN PATENT SPECIFICATION

(11) **EP 4 131 579 B1**
(45) Date of publication and mention of the grant of the patent: **25.12.2024**
(21) Application number: 22759980.0
(22) Date of filing: 17.02.2022
(51) Int. Cl.: H01M 10/6553, H01M 10/6551, H01M 10/613, H01M 10/653, H01M 50/502, H01M 10/647, H01M 50/211, H01M 50/209, H01M 50/264, H01M 50/507

(54) **BATTERY MODULE AND BATTERY PACK COMPRISING SAME**
BATTERIEMODUL UND BATTERIEPACK DAMIT
MODULE DE BATTERIE ET BLOC-BATTERIE LE COMPRENANT

(30) Priority: 25.02.2021 KR 20210025865
(43) Date of publication of application: 08.02.2023
(73) Proprietor: LG Energy Solution, Ltd., Seoul 07335 (KR)
(72) Inventor: PARK, Won Kyoung, Daejeon 34122 (KR); SEONG, Junyeob, Daejeon 34122 (KR); PARK, Subin, Daejeon 34122 (KR)
(74) Representative: Goddar, Heinz J.
(86) International application number: PCT/KR2022/002360
(87) International publication number: WO 2022/182062

(56) References cited:
- JP-A- 2012 216 328
- KR-A- 20160 149 604
- KR-A- 20190 140 669
- KR-A- 20210 020 413
- KR-B1- 102 018 719
- No further relevant documents disclosed

## Description

### [TECHNICAL FIELD]

### Cross Citation with Related Application(s)

This application claims the benefit of Korean Patent Application No. 10-2021-0025865 filed on February 25, 2021 with the Korean Intellectual Property Office.

The present disclosure relates to a battery module and a battery pack including the same, and more particularly, to a battery module having novel cooling structure and a battery pack including the same.

### [BACKGROUND]

Along with the technology development and increased demand for mobile devices, demand for secondary batteries as energy sources has been increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

Since the middle or large-sized battery module is preferably manufactured so as to have as small a size and weight as possible, a prismatic battery, a pouch-shaped battery or the like, which can be stacked with high integration and has a small weight relative to capacity, is mainly used as a battery cell of the middle or large-sized battery module. Such a battery module has a structure in which a plurality of cell assemblies including a plurality of unit battery cells are connected in series in order to obtain high output. And, the battery cell includes positive electrode and negative electrode current collectors, a separator, an active material, an electrolyte solution, and the like, and thus can be repeatedly charged and discharged by an electrochemical reaction between components.

Meanwhile, recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series or in parallel.

Meanwhile, when a plurality of battery cells are connected in series or in parallel to configure a battery pack, a method of first configuring a battery module composed of at least one battery cell and then adding other components to at least one battery module to configure a battery pack is common.

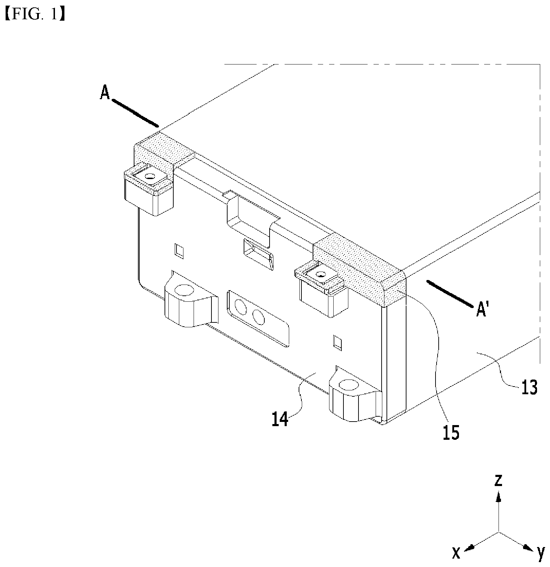

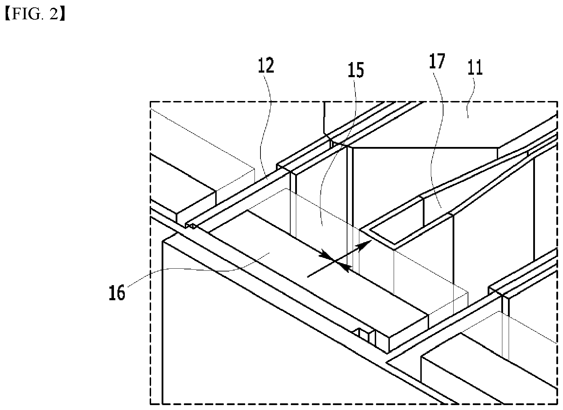

Fig. 1 shows a part of a perspective view according to a conventional battery module. Fig. 2 is an enlarged view showing a part of a cross-sectional view taken along the xy plane with reference to the cutting line A-A' of Fig. 1.

Referring to Figs. 1 and 2, the conventional battery module includes a battery cell assembly consisting of a plurality of battery cells 11 stacked on each other, and a busbar assembly that electrically connects the electrode leads 12 of the plurality of battery cells 11 to each other, a module frame 13 that wraps the battery cell assembly, and an external frame 14 that covers a busbar assembly. Here, the busbar assembly includes a busbar frame 15 having lead slots that allow the discrete passage of the electrode leads 12 of each battery cell 11, and busbar slots mounted on the busbar frame 15 and provided so as to correspond to the number of lead slots, and further includes a busbar 16 that is connected to the electrode leads passing through the busbar slots by welding, etc. Further, a cooling fin 17 may be arranged between the battery cells 11 of the battery cell assembly.

At this time, the busbar 16 is separated from the cooling fin 17 by the busbar frame 15, so that heat generated in the busbar 16 cannot be directly transferred to the cooling fin 17. Instead, the heat generated in the busbar 16 is transferred via the electrode leads 12, transferred to the cooling fin 17, and then transferred via a thermal conductive resin layer formed on the bottom part of the battery cell 11 and the module frame 13.

Recently, there is a tendency to continuously increase the necessity for high capacity, high energy, fast charging, etc. and also increase the amount of current flowing through the busbar. The high current flowing through the busbar causes heat generation in the busbar, and such heat generation is difficult to effectively cool through the conventional cooling structure alone. Therefore, in order to cool the heat generation, there is a need for a structure that can make a direct contact with the busbar to cool the busbar.

### [DETAILED DESCRIPTION OF THE INVENTION]

### [Technical Problem]

It is an object of the present disclosure to provide a battery module that can solve the heat generation problem of the busbar and a battery pack including the same.

However, the objects of the present disclosure are not limited to the aforementioned objects, and other objects which are not described herein should be clearly understood by those skilled in the art from the following detailed description and the accompanying drawings.

### [Technical Solution]

According to the present disclosure, there is provided a battery module comprising: a battery cell stack in which a plurality of battery cells are stacked, a module frame that wraps the battery cell stack, a busbar frame that covers a portion of the battery cell stack exposed from the module frame, a busbar that is connected to an electrode lead protruding from the battery cell stack via a first slot formed in the busbar frame, and a cooling fin that is located between battery cells adj acent to each other among the plurality of battery cells, wherein the busbar is connected to the cooling fin.

The battery module may further include a heat transfer member located between the busbar and the cooling fin.

The busbar frame may further include a second slot, and the heat transfer member may be formed adjacent to the second slot to come into contact with the busbar.

The cooling fin may be inserted into the second slot to come into contact with the heat transfer member.

The heat transfer member may be formed of a material having electrical insulating properties and thermal conductivity.

The heat transfer member may be surface-joined with the busbar.

The cooling fin may be surface-joined with the heat transfer member.

The battery module may further include a thermal conductive resin layer located on the bottom part of the module frame, wherein the cooling fin may be contact with the thermal conductive resin layer, and the heat generated from the busbar may be sequentially transferred to the heat transfer member, the cooling fin, and the thermal conductive resin layer.

The module frame of the battery module according to another embodiment of the present disclosure may include a structure that is opened in the upper and lower surfaces and wraps all side surface parts of the battery cell stack.

The battery module may further include a cooling plate located at the lower end of the thermal conductive resin layer, wherein the thermal conductive resin layer may come into contact with the cooling plate, and the heat transferred to the thermal conductive resin layer may be transferred to the cooling plate.

According to another embodiment of the present disclosure, there is provided a battery pack comprising the above-mentioned battery module.

### [Advantageous Effects]

According to the present disclosure, the problem of heat generation of the busbar in a high current and fast charging environment can be solved by a novel type of busbar cooling structure. Additionally, the stability of the battery module can be improved by solving the heat generation problem.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 shows a part of a perspective view according to a conventional battery module;
Fig. 2 is an enlarged view showing a part of a cross-sectional view taken along the xy plane with reference to the cutting line A-A' of Fig. 1;
Fig. 3 is an exploded perspective view of a battery module according to an embodiment of the present disclosure;
Fig. 4 is a perspective view showing a state in which the components of the battery module of Fig. 3 are combined;
Fig. 5 is a perspective view showing one battery cell included in the battery cell stack of Fig. 3;
Fig. 6 is an enlarged view showing a part of a cross-sectional view taken along the xy plane with reference to the cutting line B-B' of Fig. 4;
Fig. 7 shows the upper cross-section in Fig. 6 as viewed from above;
Fig. 8 is an enlarged view showing a part of a cross-sectional view taken along the xz plane with reference to the cutting line C-C' of Fig. 4; and
Fig. 9 is an exploded perspective view showing a part of a battery module according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the specification, when a portion is referred to as "including" or "comprising" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

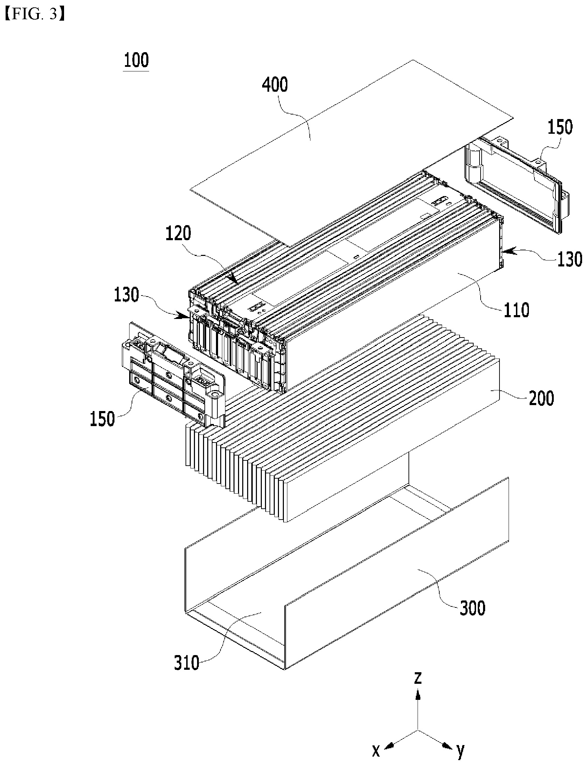

Now, a battery module according to an embodiment of the present disclosure will be described with reference to Figs. 3 to 8.

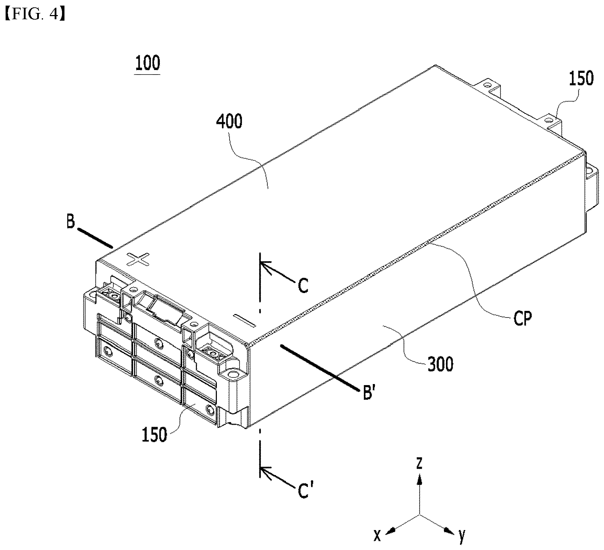

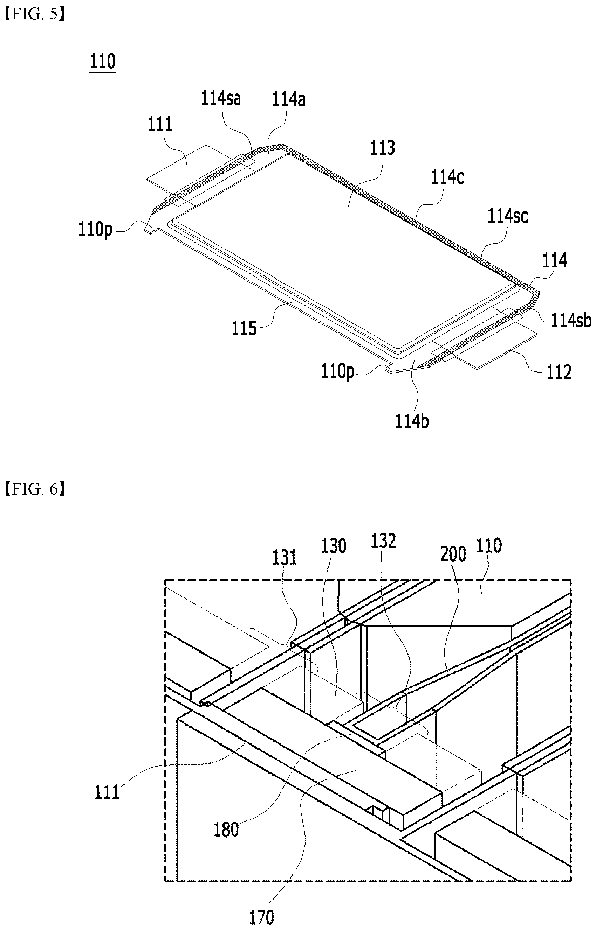

Fig. 3 is an exploded perspective view of a battery module according to an embodiment of the present disclosure. Fig. 4 is a perspective view showing a state in which the components of the battery module of Fig. 3 are combined. Fig. 5 is a perspective view showing one battery cell included in the battery cell stack of Fig. 3.

Referring to Figs. 3 and 4, the battery module 100 according to an embodiment of the present disclosure may include a battery cell stack 120 in which a plurality of battery cells 110 are stacked, a module frame that wraps the battery cell stack 120, an upper plate 400 that covers the upper part of the battery cell stack 120, end plates 150 that are respectively located on the front and rear surfaces of the battery cell stack 120, and a busbar frame 130 that is located between the battery cell stack 120 and the end plate 150. At this time, the module frame may include a U-shaped frame 300 of which an upper surface, a front surface and a rear surface are opened. Further, the battery module 100 includes a thermal conductive resin layer 310 located between the U-shaped frame 300 and the battery cell stack 120. The thermal conductive resin layer 310 is a kind of heat dissipation layer, and may be formed by applying a material having a heat dissipation function. The end plate 150 may be formed of a metal material.

When opened both sides of the U-shaped frame 300 are referred to as a first side and a second side, respectively, the U-shaped frame 300 has a plate-shaped structure that is bent so as to continuously warp the front, lower and rear surfaces adjacent to each other among the remaining outer surfaces excluding surfaces of the battery cell stack 120 corresponding to the first side and the second side. The upper surface corresponding to the lower surface of the U-shaped frame 300 is opened.

The upper plate 400 has a single plate-shaped structure that covers the remaining upper surface excluding the front, lower and rear surfaces which are wrapped by the U-shaped frame 300. The U-shaped frame 300 and the upper plate 400 can be coupled by welding or the like in a state in which the corresponding edge areas are in contact with each other, thereby forming a structure wrapping the battery cell stack 120. That is, the U-shaped frame 300 and the upper plate 400 can have a coupling part CP formed by a coupling method such as welding at an edge area corresponding to each other.

The battery cell stack 120 includes a plurality of battery cells 110 stacked in one direction, and the plurality of battery cells 110 may be stacked in the y-axis direction as shown in Fig. 3. In other words, a direction in which the plurality of battery cells 110 are stacked may be the same as a direction in which two side surface parts of the U-shaped frame 300 face each other.

The battery cell 110 is preferably a pouch type battery cell. For example, referring to Fig. 5, the battery cell 110 according to the present embodiment may have a structure in which the two electrode leads 111 and 112 protrude from one end part 114a and the other end part 114b of the battery main body 113 toward mutually opposite directions, respectively. The battery cell 110 can be manufactured by joining both end parts 114a and 114b of the cell case 114 and both side surfaces 114c connecting them in a state in which an electrode assembly (not shown) is housed in the cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat fusion, and the remaining other side part may be formed of a connection part 115. Between both end parts 114a and 114b of the battery case 114 is defined as a longitudinal direction of the battery cell 110, and between the one side surface 114c and the connection part 115 that connect both end parts 114a and 114b of the battery case 114 is defined as a width direction of the battery cell 110.

The connection part 115 is a region that extends long along one edge of the battery cell 110, and a protrusion part 110p of the battery cell 110 may be formed at an end part of the connection part 115. The protrusion part 110p may be formed on at least one of both end parts of the connection part 115 and may protrude in a direction perpendicular to the direction in which the connection part 115 extends. The protrusion part 110p may be located between one of the sealing parts 114sa and 114sb of both end parts 114a and 114b of the battery case 114, and the connection part 115.

The cell case 114 is generally formed of a laminated structure of a resin layer/metallic thin film layer/resin layer. For example, a surface of the battery case formed of an O(oriented)-nylon layer tends to slide easily by an external impact when a plurality of battery cells are stacked in order to form a medium- or large-sized battery module. Therefore, in order to prevent this sliding and maintain a stable stacked structure of the battery cells, an adhesive member, for example, a sticky adhesive such as a double-sided tape or a chemical adhesive coupled by a chemical reaction upon adhesion, can be attached to the surface of the battery case to form the battery cell stack 120. In the present embodiment, the battery cell stack 120 may be stacked in a y-axis direction and housed into the U-shaped frame 300 in a z-axis direction. As a comparative example thereto, there is a case in which the battery cells are formed as cartridge-shaped components so that fixing between the battery cells leads to assembling by the battery module frame. In this comparative example, due to the presence of the cartridge-shaped components, there is almost no cooling action or the cooling may be proceeded in a surface direction of the battery cells, whereby the cooling does not well perform toward a height direction of the battery module.

Referring to Fig. 3, the U-shaped frame 300 according to the present embodiment includes a bottom part and two side surface parts facing each other connected by the bottom part. Before the battery cell stack 120 is mounted on the bottom part of the U-shaped frame 300, a thermal conductive resin is applied to the bottom part of the U-shaped frame 300, and the thermal conductive resin can be cured to form a thermal conductive resin layer 310. The thermal conductive resin layer 310 is located between the bottom part of the U-shaped frame 300 and the battery cell stack, and can serve to transfer heat generated in the battery cell 110 to the bottom of the battery module 100 and fix the battery cell stack 120.

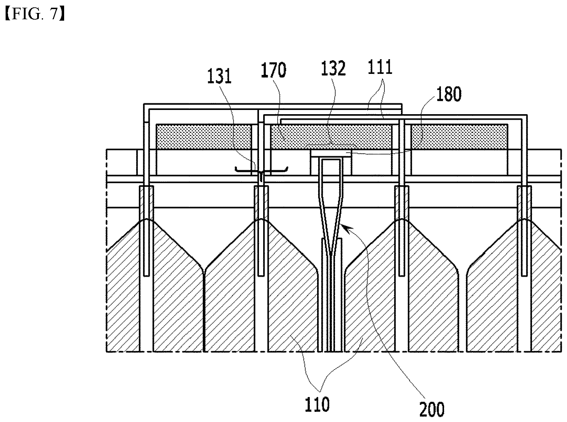

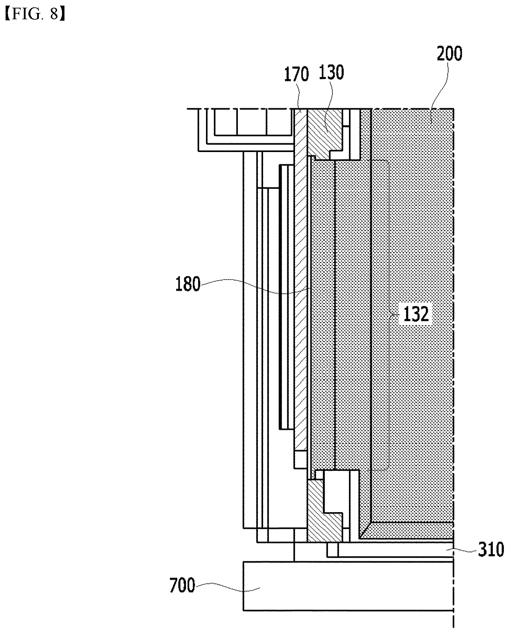

Fig. 6 is an enlarged view showing a part of a cross-sectional view taken along the xy plane with reference to the cutting line B-B' of Fig. 4. Fig. 7 shows the upper cross-section in Fig. 6 as viewed from above. Fig. 8 is an enlarged view showing a part of a cross-sectional view taken along the xz plane with reference to the cutting line C-C' of Fig. 4.

The conventional battery module does not have a direct cooling path for the busbar, and thus, heat generated by the busbar was emitted only by a path connecting to the busbar, electrode leads, battery cells, cooling fins, and thermal conductive resin layer. However, in a situation where a high heat generation of the busbar is made for a short time by the flow of high current, similarly to rapid charging, a cooling structure capable of minimizing the temperature rise of the busbar was needed.

Therefore, referring to Figs. 6 to 8, the battery module 100 according to the present embodiment includes a busbar frame 130 that covers a portion of the battery cell stack 120 exposed from the module frame 300, a busbar 170 that is connected to the electrode lead 111 protruding from the battery cell stack via a first slot 131 formed in the busbar frame 130, and a cooling fin 200 that is located between battery cells 110 adjacent to each other among the plurality of battery cells 110. At this time, the busbar 170 is connected to the cooling fin 200. Further, the battery module 100 according to the present embodiment may further include a heat transfer member 180 located between the busbar 170 and the cooling fin 200. In a modified embodiment, the heat transfer member 180 may be omitted, and the cooling fin 200 may be in direct contact with the busbar 170.

The busbar frame 130 according to the present embodiment may further include a second slot 132. The heat transfer member 180 may be formed so as to be adjacent to the second slot 132 of the busbar frame 130 to come into contact with the busbar 170. Also, the cooling fin 200 may be inserted into the second slot 132 to come into contact with the heat transfer member 180. Further, the cooling fin 200 may further come into contact with the second slot 132 and the busbar frame 130. Successive heat transfer of the busbar 170, heat transfer member 180 and cooling fin 200, or successive heat transfer of the busbar 170, heat transfer member 180, cooling fin 200 and busbar frame 130 can be made through the contacts.

The heat transfer member 180 according to the present embodiment may be formed of a material having electrical insulation properties and thermal conductivity. Specifically, the heat transfer member 180 may include one of a heat transfer pad and a thermal conductive resin layer. Therefore, the heat transfer member 180 may enable heat conduction while maintaining insulation properties between the busbar 170 and the cooling fin 200.

The heat transfer member 180 may be surface-joined with the busbar 170. Also, the cooling fin 200 may be surface-joined with the heat transfer member 180. Therefore, heat in the busbar 170 may be transferred to the cooling fin 200 by the busbar 170, the heat transfer member 180, and the cooling fins 200 that are surface-joined as described above.

At this time, the battery module according to the present embodiment may further include a thermal conductive resin layer 310 that is located on the bottom part of the module frame, particularly the U-shaped frame 300 of the module frame. The cooling fins 200 may come into contact with the thermal conductive resin layer 310. A cooling plate 700 as a pack component or a cooling plate 700 integrally formed with the battery module may be formed under the bottom part of the U-shaped frame 300 included in the battery module according to the present embodiment. The heat transferred to the cooling fin 200 is transferred to the thermal conductive resin layer 310, transferred from the thermal conductive resin layer 310 to the cooling plate 700 to be discharged. Therefore, the heat generated from the busbar 170 may be sequentially transferred to the heat transfer member 180, the cooling fins 200, the thermal conductive resin layer 310, and the cooling plate 700 to be discharged. Through the sequential delivery and release structure as described above, heat from the busbar generated in a high current situation such as rapid charging can be effectively dissipated, and the stability of the battery module can be secured.

The cooling fin 200 according to the present embodiment can not only directly cool the busbar 170, but also transfer and cool the heat generated in the battery cell 110 to the thermal conductive resin layer 310 and the cooling plate 700, and thus, dual cooling can be made. Further, the busbar 170 is thermally connected to the battery cell 110 having high specific heat and thermal capacity via the cooling fin 200, so that not only it slows down the temperature rise rate of the busbar 170, but also the resistance can be lowered by keeping the temperature of the busbar 170 rather high when the outside air temperature is low. Thereby, the energy efficiency can be increased.

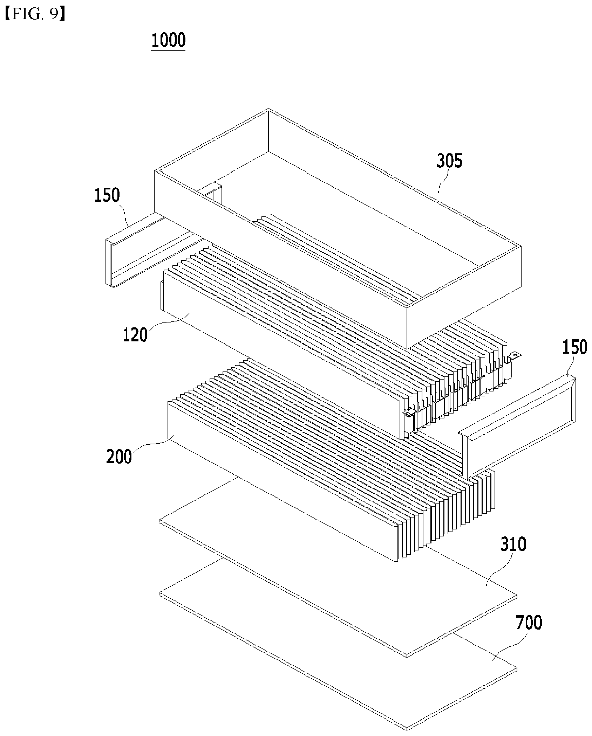

Next, a battery module according to another embodiment of the present disclosure will be described with reference to Fig. 9.

Fig. 9 is an exploded perspective view showing a part of a battery module according to another embodiment of the present disclosure. Since contents overlapping with the contents of the above-mentioned battery module exist herein, only the contents different from those concerning the above-mentioned will be described.

Referring to Fig. 9, the module frame of the present disclosure may be a wrapping frame 305 that is opened in the upper and lower surfaces, and wraps all side surface parts of the battery cell stack 120. Since the wrapping frame 305 is opened in both the upper and lower surfaces, the thermal conductive resin layer 310 may be formed at a position corresponding to the lower surface of the wrapping frame 305. The battery module 1000 of the present disclosure includes a wrapping frame 305, whereby it can maximize the contact between the battery cell stack 120 and the thermal conductive resin layer 310 and between the cooling fins 200 and the thermal conductive resin layer 310 to maximize heat transfer and heat dissipation.

At this time, the battery module 1000 of the present disclosure may further include a cooling plate 700 that is located at the lower end of the thermal conductive resin layer 310. The thermal conductive resin layer 310 may further come into contact with the cooling plate to conduct heat transfer. Accordingly, the effect that heat transfer is maximized can be achieved.

The above-mentioned battery module can be included in the battery pack. The battery pack may have a structure in which one or more of the battery modules according to the embodiment of the present disclosure are gathered, and packed together with a battery management system (BMS) and a cooling device that control and manage battery's temperature, voltage, etc.

The above-mentioned battery pack can be applied to various devices. Such a device may be applied to a vehicle means such as an electric bicycle, an electric vehicle, or a hybrid vehicle, but the present disclosure is not limited thereto, and is applicable to various devices that can use a battery module, which also falls under the scope of the present disclosure.

### [Description of Reference Numerals]

100: battery module
110: battery cell
120: battery cell stack
130: busbar frame
131: first slot
132: second slot
170: busbar
180: heat transfer member
200: cooling fin
300: U-shaped frame
305: wrapping frame
310: thermal conductive resin layer
700: cooling plate

## Claims

1. A battery module comprising:
a battery cell stack in which a plurality of battery cells are stacked,
a module frame that wraps the battery cell stack,
a busbar frame that covers a portion of the battery cell stack exposed from the module frame,
a busbar that is connected to an electrode lead protruding from the battery cell stack via a first slot formed in the busbar frame, and
a cooling fin that is located between battery cells adjacent to each other among the plurality of battery cells,
wherein the busbar is connected to the cooling fin.

2. The battery module of claim 1,
which further comprises a heat transfer member located between the busbar and the cooling fin.

3. The battery module of claim 2, wherein:
the busbar frame further comprises a second slot, and
the heat transfer member is formed adjacent to the second slot to come into contact with the busbar.

4. The battery module of claim 3, wherein:
the cooling fin is inserted into the second slot to come into contact with the heat transfer member.

5. The battery module of claim 4, wherein:
the heat transfer member is formed of a material having electrical insulating properties and thermal conductivity.

6. The battery module of claim 2, wherein:
the heat transfer member is surface-joined with the busbar.

7. The battery module of claim 6, wherein:
the cooling fin is surface-joined with the heat transfer member.

8. The battery module of claim 1,
which further comprises a thermal conductive resin layer located on the bottom part of the module frame,
wherein the cooling fin is contact with the thermal conductive resin layer, and the heat generated from the busbar is sequentially transferred to the heat transfer member, the cooling fin, and the thermal conductive resin layer.

9. The battery module of claim 8, wherein:
the module frame comprises a structure that is opened in the upper and lower surfaces and wraps all side surface parts of the battery cell stack.

10. The battery module of claim 9,
which further comprises a cooling plate located at the lower end of the thermal conductive resin layer,
wherein the thermal conductive resin layer comes into contact with the cooling plate, and the heat transferred to the thermal conductive resin layer is transferred to the cooling plate.

11. A battery pack comprising the battery module of claim 1.

## Patentansprüche

1. Batteriemodul, umfassend:
einen Batteriezellenstapel, in dem eine Vielzahl von Batteriezellen gestapelt sind,
einen Modulrahmen, der den Batteriezellenstapel umhüllt,
einen Sammelschienenrahmen, der einen Abschnitt des Batteriezellenstapels bedeckt, der von dem Modulrahmen freiliegt,
eine Sammelschiene, die mit einer Elektrodenleitung verbunden ist, die von dem Batteriezellenstapel über einen ersten Schlitz vorsteht, der in dem Sammelschienenrahmen ausgebildet ist, und
eine Kühlrippe, die zwischen zueinander benachbarten Batteriezellen unter der Vielzahl von Batteriezellen angeordnet ist,
wobei die Sammelschiene mit der Kühlrippe verbunden ist.

2. Batteriemodul nach Anspruch 1,
das ferner ein Wärmeübertragungselement umfasst, das zwischen der Sammelschiene und der Kühlrippe angeordnet ist.

3. Batteriemodul nach Anspruch 2, wobei:
der Sammelschienenrahmen ferner einen zweiten Schlitz umfasst, und
das Wärmeübertragungselement benachbart zu dem zweiten Schlitz ausgebildet ist, um mit der Sammelschiene in Kontakt zu kommen.

4. Batteriemodul nach Anspruch 3, wobei:
die Kühlrippe in den zweiten Schlitz eingesetzt ist, um mit dem Wärmeübertragungselement in Kontakt zu kommen.

5. Batteriemodul nach Anspruch 4, wobei:
das Wärmeübertragungselement aus einem Material gebildet ist, das elektrisch isolierende Eigenschaften und Wärmeleitfähigkeit aufweist.

6. Batteriemodul nach Anspruch 2, wobei:
das Wärmeübertragungselement mit der Sammelschiene oberflächenverbunden ist.

7. Batteriemodul nach Anspruch 6, wobei:
die Kühlrippe mit dem Wärmeübertragungselement oberflächenverbunden ist.

8. Batteriemodul nach Anspruch 1,
das ferner eine wärmeleitfähige Harzschicht umfasst, die sich auf dem unteren Teil des Modulrahmens befindet,
wobei die Kühlrippe mit der wärmeleitfähigen Harzschicht in Kontakt steht und die von der Sammelschiene erzeugte Wärme nacheinander auf das Wärmeübertragungselement, die Kühlrippe und die wärmeleitfähige Harzschicht übertragen wird.

9. Batteriemodul nach Anspruch 8, wobei:
der Modulrahmen eine Struktur umfasst, die in der oberen und unteren Fläche geöffnet ist und alle Seitenflächenteile des Batteriezellenstapels umhüllt.

10. Batteriemodul nach Anspruch 9,
das ferner eine Kühlplatte umfasst, die sich am unteren Ende der wärmeleitfähigen Harzschicht befindet,
wobei die wärmeleitfähige Harzschicht mit der Kühlplatte in Kontakt kommt und die auf die wärmeleitfähige Harzschicht übertragene Wärme auf die Kühlplatte übertragen wird.

11. Batteriepack, umfassend das Batteriemodul nach Anspruch 1.

## Revendications

1. Module de batterie comprenant :
un empilement de cellules de batterie dans lequel est empilée une pluralité de cellules de batterie,
un châssis de module enveloppant l'empilement de cellules de batterie,
un châssis de barre omnibus couvrant une partie de l'empilement de cellules de batterie exposée depuis le châssis de module,
une barre omnibus connectée à un conducteur d'électrode faisant saillie de l'empilement de cellules de batterie par le biais d'une première fente formée dans le châssis de barre omnibus, et
une ailette de refroidissement située entre des cellules de batterie adjacentes entre elles parmi la pluralité de cellules de batterie,
la barre omnibus étant connectée à l'ailette de refroidissement.

2. Module de batterie selon la revendication 1 :
comprenant en outre un élément de transfert thermique situé entre la barre omnibus et l'ailette de refroidissement.

3. Module de batterie selon la revendication 2 :
la barre omnibus comprenant en outre une deuxième fente, et
l'élément de transfert thermique étant formé dans une position adjacente à la deuxième fente afin d'entrer en contact avec la barre omnibus.

4. Module de batterie selon la revendication 3 :
l'ailette de refroidissement étant insérée dans la deuxième fente de façon à se placer au contact de l'élément de transfert thermique.

5. Module de batterie selon la revendication 4 :
l'élément de transfert thermique étant réalisé avec un matériau possédant des propriétés d'isolation électrique et de conductivité thermique.

6. Module de batterie selon la revendication 2,
l'élément de transfert thermique étant joint en surface à la barre omnibus.

7. Module de batterie selon la revendication 6,
l'ailette de refroidissement étant jointe en surface à l'élément de transfert thermique.

8. Module de batterie selon la revendication 1,
comprenant en outre une couche de résine thermo-conductrice située sur la partie inférieure du châssis de module,
l'ailette de refroidissement se trouvant au contact de la couche de résine thermo-conductrice, et la chaleur dégagée par la barre omnibus étant transférée séquentiellement à l'élément de transfert thermique, à l'ailette de refroidissement, et à la couche de résine thermo-conductrice.

9. Module de batterie selon la revendication 8,
le châssis de module comprenant une structure ouverte dans les surfaces supérieures et inférieures, et enveloppant toutes les parties à surface latérale de l'empilement de cellules de batterie.

10. Module de batterie selon la revendication 9,
comprenant en outre une plaque de refroidissement située à l'extrémité inférieure de la couche de résine thermo-conductrice,
la couche de résine thermo-conductrice entrant en contact avec la plaque de refroidissement, et la chaleur dégagée vers la couche de résine thermo-conductrice étant transférée à la plaque de refroidissement.

11. Bloc-batterie comprenant le module de batterie selon la revendication 1.
